Europäisches Patentamt

European Patent Office

Office européen des brevets

(11) Veröffentlichungsnummer: **0 246 421**
**B1**

(12) **EUROPÄISCHE PATENTSCHRIFT**

(45) Veröffentlichungstag der Patentschrift: **23.01.91**

(21) Anmeldenummer: **87104178.6**

(22) Anmeldetag: **21.03.87**

(51) Int. Cl.⁵: **E 04 F 13/08,** F 16 B 7/06, F 16 G 11/12, F 16 G 11/00

(54) **Fassadenplattenanker.**

(30) Priorität: **23.05.86 DE 8613999 u**

(43) Veröffentlichungstag der Anmeldung:
**25.11.87 Patentblatt 87/48**

(45) Bekanntmachung des Hinweises auf die
Patenterteilung:
**23.01.91 Patentblatt 91/04**

(84) Benannte Vertragsstaaten:
**AT BE CH DE ES FR GB GR IT LI LU NL SE**

(56) Entgegenhaltungen:
**EP-A-0 104 135**
**DE-A-2 023 618**
**DE-A-2 405 262**
**DE-A-2 836 817**
**FR-A-2 236 120**
**GB-A-2 044 380**
**US-A-4 533 276**

(73) Patentinhaber: **Halfeneisen GmbH & Co.**
**Kommanditgesellschaft**
**Harffstrasse 47-51**
**4000 Düsseldorf 13 (DE)**

(72) Erfinder: **Beine, Karlheinz**
**Am Ehrkamper Bruch 9**
**D-4030 Ratingen 5 (DE)**

(74) Vertreter: **Rieder, Hans-Joachim, Dr.**
**Corneliusstrasse 45 Postfach 11 04 51**
**D-5600 Wuppertal 11 (DE)**

## Beschreibung

Die Erfindung betrifft einen Fassadenplattenanker mit einem bauerkseitig und einem fassadenplattenseitig zu befestigenden Ankerteil und einem zur Höheneinstellbarkeit längenveränderbaren, die beiden Ankerteile verbindenden Zugglied und einer Augen-/Querstückverbindung zwischen den Teilen. DE-A-2 836 817 beschreibt einen derartigen Fassadenplattenanker.

Bei sonst noch bekannten Fassadenplattenankern dieser Art enthält das fassadenplattenseitig zu befestigende Ankerteil zwei schlaufenartig gestaltete Augen, die im rückwärtigen Bereich der Fassadenplatten eingelassen sind. Durch eine rückwärtige Aussparung der Fassadenplatte auf Höhe der Augen läßt sich ein zapfenartiges Querstück einführen, welches bei diesem Vorgang eine Öse des Zuggliedes zu durchsetzen hat und welches anschließend mit seinen Endabschnitten im Bereich der Augenscheitel liegt. Gegen Herunterrutschen wird das Querstück durch eine in Sicherungsstellung zu biegende Lasche gehalten Die entsprechenden Montageschritte sind wegen des mühsamen Einfädelns schwierig durchzuführen. Wird dagegen die Fassadenplatte bereits herstellerseitig mit dem Querstück und Zugglied ausgerüstet so erhält man stapelungs- und transporttechnische Nachteile wegen des die Fassadenplatte überragenden Zuggliedes.

Dem Gegenstand der Erfindung liegt die Aufgabe zugrunde, einen gattungsgemäßen Fassadenplattenanker in herstellungstechnisch einfacher Weise gebrauchsvorteilhafter auszugestalten.

Gelöst wird diese Aufgabe dadurch, daß das Querstück und der an dieses anschließende Zuggliedabschnitt als eine in sich kippfeste Einwinkeleinheit des aus einem Flachbandstreifen gebogenen und mit seitlichem, sich bis zum Augenscheiel fortsetzendem Einwinkelfenster ausgestatteten Auges gestaltet ist, welch letzteres in dem dem Augenscheitel gegenüberliegenden Bereich eine quer zur Streifenebene liegende Aufhängebohrung besitzt.

Zufolge derartiger Ausgestaltung ist ein gattungsgemäßer Fassadenplattenanker von erhöhtem Gebrauchswert angegeben. Das Herbeiführen der Augen-/Querstückverbindung läßt sich auf einfache Weise bewerkstelligen, und zwar sogar werkzeuglos. Die in dem dem Augenscheitel gegenüberliegenden Bereich befindliche Aufhängebohrung gestattet das Ausschwenken des Auges aus der rückwärtigen Aussparung der Fassadenplatte wodurch das Einwinkelfenster zugänglich wird. Es kann nun das Querstück und der an dieses anschließende Zuggliedabschnitt als in sich kippfeste Einwinkeleinheit in Eingriff gebracht werden wobei der Zuggliedabschnitt als Handhabe dient, mit dem das Querstück in das Einwinkelfenster eingeführt wird. Nachdem sich das Querstück innerhalb des Auges befindet, ist es mittels des Zuggliedabschnittes in die Abstützstellung zu bewegen. Die entsprechenden Bewegungsabläufe beim Einwinkeln sind kurzfristig zu bewerkstelligen und führen demgemäß zu einer nicht unerheblichen Zeiteinsparung. Das Auge seinerseits ist auch kostengünstig fertigbar. Es braucht lediglich ein mit dem Einwinkelfenster ausgestatteter. Flachbandstreifen in seine Schlaufenform gebogen zu werden. Der dem Augenscheitel gegenüberliegende Bereich erhält dann die quer zur Streifenebene liegende Aufhängebohrung, die von dem an der Fassadenplatte verankerten Ankerbügel durchsetzt wird. Die Aufhängebohrung erlaubt dabei die erforderliche Beweglichkeit in den beiden wesentlichen Ebenen, und zwar sowohl längs- als auch quer zur Fassadenplattenebene.

Eine vorteilhafte Weiterbildung besteht darin, daß der Flachbandstreifen auf seinem dem Einwinkelfenster gegenüberliegenden Abschnitt ein zusätzliches Fenster besitzt, welches mit Abstand vom Augenscheitel endet. Diese Maßnahme führt zu einer weiteren Erleichterung beim Einsetzen der Einwinkeleinheit. Selbst wenn der Zuggliedabschnitt das Querstück überragen sollte, ist das entsprechende Einwinkeln möglich.

Sicherungstechnisch ist es von Vorteil, daß das Einwinkelende im Bereich seiner etwa deckend zum zusätzlichen Fenster liegenden Länge breiter gestaltet ist als der von dort in den Bereich des Augenscheitels reichende Fensterabschnitt. Auf diese Weise läßt sich die Abstützfläche für das Querstück im Bereich des Augenscheitels vergrößern.

Optimal erweist es sich dabei, daß die Breite des Fensterabschnitts im Bereich des Augenscheitels etwa dem Durchmesser des an das Querstück anschließenden Zuggliedabschnitts entspricht. Daher ist jegliche Querverlagerung des Querstücks verhindert. Eine Querverlagerung der Fassadenplatte führt stets zu einem Verschwenken des Auges um die von der Aufhängebohrung gebildete Gelenkstelle.

Weiterhin erweist es sich handhabungstechnisch als günstig, wenn das Querstück als Mutter des Zuggliedabschnitts gestaltet ist. Eine Längenveränderung des Zugliedes, z.B. bei der Montage der Fassadenplatte, läßt sich durch einfaches Drehen des Zugliedes in der einen oder anderen Richtung vornehmen.

Eine große Anlagefläche zwischen dem Auge und dem Querstück wird dadurch verwirklicht, daß das Querstück im Querschnitt halbkreisförmig gestaltet ist mit dem Augenscheitel zugekehrter Bogenfläche.

Um eine Abstandsverstellung der Fassadenplatte zum Rohbau vornehmen zu können, besitzt das fassadenplattenseitige Ankerteil eine stopfenverschlossene Aufnahme als Teil eines Abstandhalters. Der Stopfenverschluß ist wichtig beim Einsetzen des Ankerteils in die Fassadenplatte. Zum Anbringen des Abstandhalters ist der Stopfen der Aufnahme zu entnehmen.

Dabei erweist es sich als günstig, daß das Ergänzungsteil des Abstandhalters in ein Gewinde der hülsenförmigen Aufnahme eingeschraubt ist, welches Gewindeloch mittels des einschraubbaren Stopfens verschließbar ist. Der Stopfen schließt mit seiner Außenfläche mit der Rückfläche der Fassadenplatte ab, so daß er keinen Überstand bildet. Er läßt sich jedoch in einfacher Weise aus dem Gewinde der hülsenförmigen Aufnahme entfernen. Das Gewinde selbst ist daher unverschmutzt und erlaubt das Einsetzen des Ergänzungsteils des Abstandhalters ohne Beeinträchtigung.

Eine weitere Montageerleichterung besteht darin, zwei Augen mit je einem Querstück vorzusehen, welche beide zueinander gegenläufige Mutterngewinde besitzen, durch welche die mit entsprechend gegenläufigem Gewinde ausgestatteten Zuggliedabschnitte durchschraubbar sind. Das mauerwerkseitige Ankerteil kann daher ebenfalls ein entsprechendes Auge ausbilden, welches auf einfache Weise in Eingriff bringbar ist zu dem anderen Zuggliedabschnitt mit darauf befindlichem Querstück. Nach Festlegen des mauerwerkseitigen Ankerteils kann dann durch Drehen des Zuggliedes in die eine oder andere Richtung eine Höhenverstellung der Fassadenplatte erzielt werden.

Der vorerwähnte Vorgang wird durch einen Werkzeug-Angriffsabschnitt im Mittelbereich des Zuggliedes erleichtert.

Insbesondere ist es günstig, wenn der Werkzeug-Angriffsabschnitt als querschnittsgrößerer Mehrkant gestaltet ist.

Schließlich besteht ein vorteilhaftes Merkmal noch darin, daß das Gewinde des Zuggliedabschnitts endständig verquetscht ist. Das Zugglied kann daher nicht ungewollt aus dem Querstück herausgeschraubt werden unter Erhöhung des Sicherheitswertes.

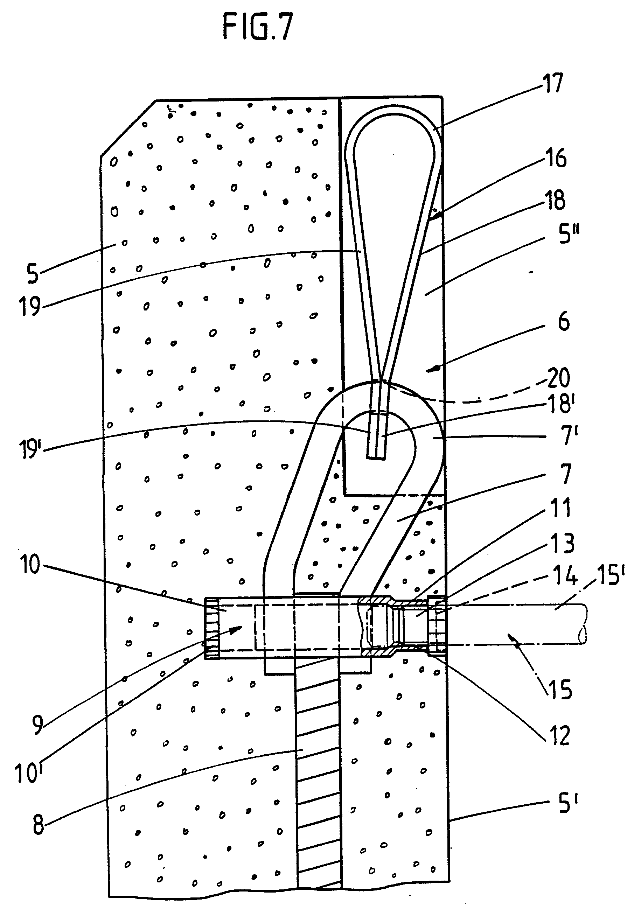

Nachstehend wird ein Ausführungsbeispiel der Erfindung anhand der Fig. 1 bis 7 erläutert. Es zeigt

Fig. 1 einen einerseits am Rohbau und andererseits an der Fassadenplatte angreifenden Fassadenplattenanker in seiner Belastungsstellung,

Fig. 2 eine Seitenansicht des Fassadenplattenankers, bei strichpunktiert dargestellter Fassadenplatte,

Fig. 3 einen Querschnitt der Fassadenplatte in ihrem oberen Bereich mit über ihre Rückseite ausgeschwenktem Auge und mit in das Augeninnere mittels des Zuggliedes durch das Einwinkelfenster eingeführtem Querstück,

Fig. 4 eine Draufsicht auf Fig. 3,

Fig. 5 eine der Fig. 3 entsprechende Darstellung, jedoch bei weiterer Einsetzbewegung der Einwinkeleinheit,

Fig. 6 ebenfalls eine entsprechende Darstellung, wobei das Querstück sich am Augenscheitel abstützt und das Auge in die rückwärtige Aussparung der Fassadenplatte eingeschwenkt ist und

Fig. 7 einen Querschnitt durch die Fassadenplatte im Bereich des fassadenplattenseitig befestigten Ankerteils mit stopfenverschlossener Aufnahme.

Der als Ganzes mit der Ziffer 1 bezeichnete Fassadenplattenanker besitzt ein am Rohbau 2 zu befestigendes Ankerteil 3, von welchem ein Zugglied 4 schräg abwärts gerichtet ausgeht. Letzteres greift an einem in die Fassadenplatte 5 eingelassenen Ankerteil 6 an.

Das fassadenplattenseitige Ankerteil 6 enthält einen etwa haarnadelförmig gebogenen Ankerbügel 7, dessen Scheitel 7' in eine rückwärtige Aussparung 5'' der Fassadenplatte 5 hineinragt. Letztere setzt sich bis zum oberen Rand der Fassadenplatte 5 fort. Zwischen den stumpfwinklig abgebogenen Enden der Haarnadelschenkel liegt das obere Ende eines Verankerungsstabes 8 ein. Dieses Ende ist mit dem Ankerbügel verschweißt. Im übrigen ist der Verankerungsstab 8 etwa lotrecht ausgerichtet, während der Ankerbügel 7 einen geneigt zur Rückfläche 5' der Fassadenplatte 5 gerichteten Verlauf einnimmt. Die Ausrichtung des Ankerbügels ist dabei etwa auf die Ausrichtung des Zuggliedes 4 abgestimmt.

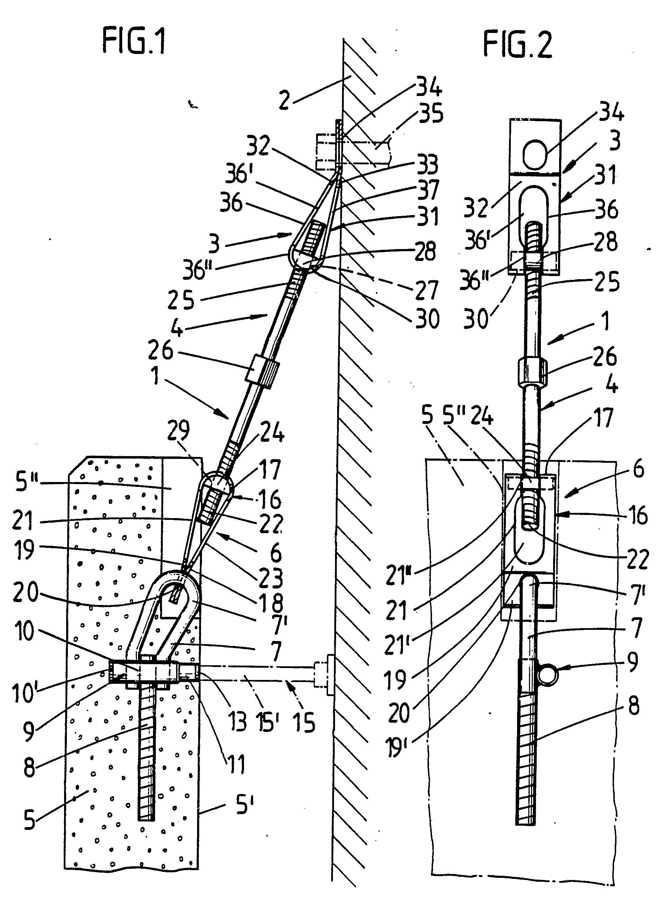

Kreuzend zu den überlappenden Enden des Verankerungsstabes 8 und des Ankerbügels 7 ist eine hülsenförmige Aufnahme 9 durch Schweißung festgelegt. Die Ausrichtung der Aufnahme 9 verläuft horizontal. Sie setzt sich aus einem querschnittsgrößeren, endseitig von einem Stopfen 10' verschlossenen Rohrabschnitt 10 und einem querschnittsverringerten Rohrabschnitt 11 zusammen, der mit geringem Abstand vor der Rückfläche 5' der Fassadenplatte 5 endet. Der querschnittskleinere Rohrabschnitt 11 ist mit einem Innengewinde 12 ausgestattet, in welchen vor Montage der Fassadenplatte 5 ein Stopfen 13 eingedreht ist. Dessen außenseitige Stirnfläche schließt mit der Rückfläche 5' der Fassadenplatte 5 ab. Von der Stirnfläche des Stopfens 13 geht ein Schlitz 14 aus, um mittels eines Schraubendrehers den Stopfen 13 herausschrauben zu können. In das freigewordene Gewindeloch kann dann das in Fig. 1 strichpunktiert dargestellte Ergänzungsteil 15' eines sich am Mauerwerk 2 abstützenden Abstandhalters 15 eingeschraubt werden, um einen bestimmten Abstand zwischen Mauerwerk und Fassadenplatte einzuhalten.

Ein weiterer Bestandteil des fassadenplattenseitigen Ankerteils 6 ist ein Auge 16. Letzteres ist aus einem Flachbandstreifen gebogen unter Bildung eines halbkreisförmig verlaufenden Augenscheitels 17. Die von diesem ausgehenden Abschnitte 18, 19 verlaufen konvergierend zueinander mit in entgegengesetzter Richtung leicht abgebogenen Endabschnitten derart, daß die Endabschnitte 18', 19' flächig aufeinanderliegen. In diesem endständigen Bereich des Auges 16 befindet sich eine quer zur Streifenebene ausgerichtete Aufhängebohrung 20, deren Durchmesser etwas größer ist als der Durchmesser des Rundmateriales des Ankerbügels 7. Daher kann das Auge auf dem Ankerbügel 7 in eine solche Stellung bewegt werden, daß es vollends in der rückwärtigen Aussparung 5'' der Fassadenplatte 5 einliegt.

In dem einen Abschnitt 19 des Auges befindet sich ein langlochartig gestaltetes Einwinkelfenster 21. Es setzt sich aus zwei Fensterabschnitten 21' und 21'' zusamen derart, daß der Fensterabschnitt 21'' bis in den Bereich des Augenscheitels 17 ragt. Die Breite x des Fensterabschnitts 21'' im Bereich des Augenscheitels 17 ist kleiner als die Breite y des anderen Fensterabschnitts 21', und entspricht dem Durchmesser d des Zuggliedabschnittes 22 des Zuggliedes 4. Gegenüberliegend zum Fensterabschnitt 21' erstreckt sich im anderen Abschnitt 18 des Auges ein zusätzliches Fenster 23, welches in Breite und Länge dem Fensterabschnitt 21' angepaßt ist und daher mit Abstand vom Augenscheitel 17 endet.

Der mit einem Linksgewinde ausgestattete Zuggliedabschnitt 22 durchgreift ein im Querschnitt halbkreisförmig gestaltetes Querstück 24 derart, daß der in der Diametralen liegende Boden 24' dem Ende des Zuggliedabschnitts 22 zugekehrt ist. Die entsprechende Bogenfläche des Querstücks 24 entspricht dabei der Innenkrümmung des Augenscheitels 17. Ferner ist die Länge des Querstücks 24 etwa so groß wie die Breite des das Auge bildenden Flachbandstreifens. Die Länge dés Querstücks 24 ist jedoch geringer als die Länge des Fensterabschnitts, 21'. Ferner ist der Durchmesser des Querstücks etwas geringer als die Breite y des Fensterabschnitts 21'.

Das stangenförmig gestaltete Zugglied 4 bildet an seinem anderen Ende ebenfalls einen Zuggliedabschnitt 25 aus, welches jedoch mit einem Rechtsgewinde ausgestattet ist. Im Mittelbereich des Zuggliedes 4 befindet sich ein Werkzeug-Angriffsabschnitt 26, welcher als querschnittsgrößerer, sechseckiger Mehrkant gestaltet ist.

Der Zuggliedabschnitt 25 durchgreift ebenfalls ein Muttergewinde 27 eines Querstücks 28. Es ist verständlich, daß dieses Muttergewinde 27 gegenläufig zum Muttergewinde 29 des anderen Querstücks 24 gestaltet ist. Das Querstück 28 entspricht der Querschnittsform des anderen Querstücks 24. Seine Bogenfläche liegt an der Innenkrümmung des Augenscheitels 30 eines Auges 31 an, welches das bauwerkseitige Ankerteil 3 darstellt. Die von dem Augenscheitel 30 ausgehenden Abschnitte 32, 33 verlaufen konvergierend und liegen im Endbereich zufolge Abbiegung flächig aufeinander. Der entsprechende Endbereich ist leicht abgewinkelt und enthält eine langlochartige Öffnung 34 zum Durchtritt einer am Rohbau 2 sitzenden Ankerschraube 35.

In dem einen Abschnitt 32 ist ein sich aus zwei Fensterabschnitten 36' und 36'' zusammensetzendes Einwinkelfenster 36 vorgesehen. Dem Fensterabschnitt 36' liegt in dem anderen Abschnitt 33 ein zusätzliches Fenster 37 gegenüber. Die Maße der Fenster und Anordnung derselben entspricht den Fenstern des anderen Auges 16.

Vor dem Montieren des Fassadenplattenankers ist das Zugglied endständig bereits mit den Querstücken 24, 28 bestückt, d.h., daß diese auf die entsprechenden Gewindeabschnitte aufgeschraubt sind. Damit die Querstücke nicht ungewollt abdrehbar sind, weisen die Zuggliedabschnitte 22, 25 endständige Verquetschungen 39 auf.

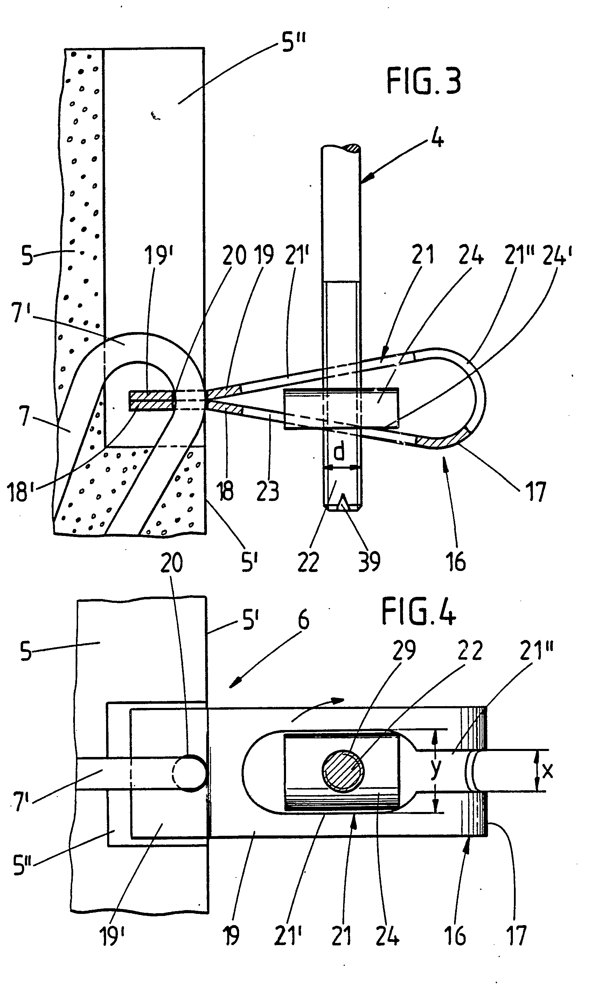

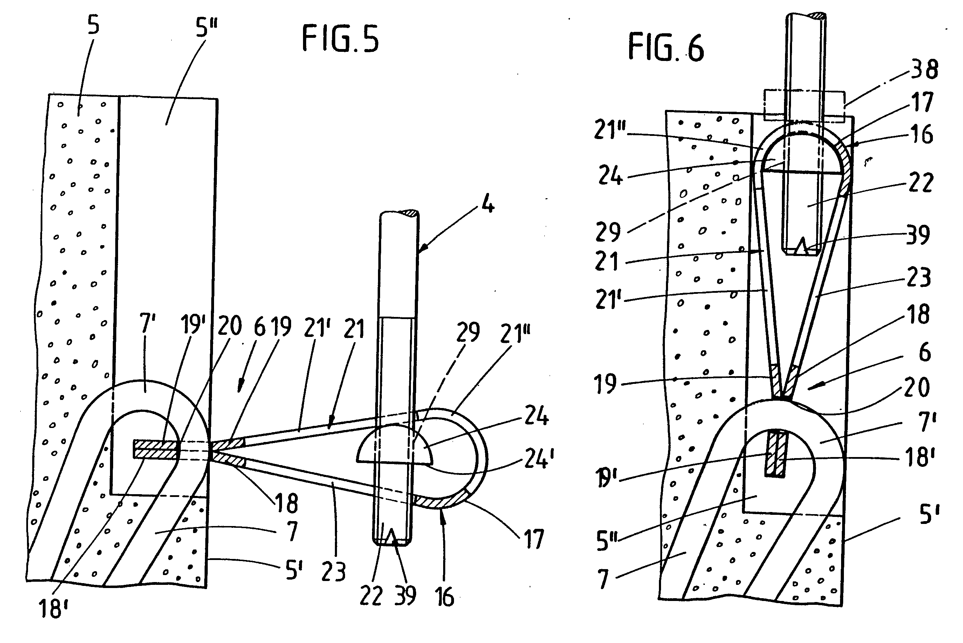

Die Fassadenplatten 5 werden so der Baustelle zugeliefert, daß die Augen 16 innerhalb der rückwärtigen Aussparungen 5'' der Fassadenplatten 5 einliegen. Um die Augen-/Querstückverbindung zu erreichen, wird das Auge 16 in die Stellung gemäß Fig. 3 und 4 geschwenkt. Dadurch ist das Einwinkelfenster 21 zugänglich, so daß gemäß Fig. 3 und 4 der Zuggliedabschnitt 22 mit darauf sitzendem Querstück 24 als kippfeste Einwinkeleinheit eingesetzt werden kann. Dabei wird das Querstück 24 durch den Fensterabschnitt 21' in den Innenraum des Auges 16 geführt. Anschließend ist der Zuggliedabschnitt 22 mit dem Auge in die Stellung gemäß Fig. 5 zu drehen und dann weiter in den Bereich der Innenkrümmung des Augenscheitels 17 zu bewegen. Der Zuggliedabschnitt 22 gelangt dadurch in den Fensterabschnitt 21'', so daß anschließend die Stellung gemäß Fig. 6 herbeigeführt werden kann. Z.B. ist es möglich, zusätzlich zum Querstück 24 eine in Fig. 6 strichpunktiert veranschaulichte Mutter 38 einzusetzen unter Erzielung einer gewissen Lagensicherung des Zuggliedes in der unbelasteten Stellung.

Das Herbeiführen der Augen-/Querstückverbindung mit dem mauerwerkseitigen Ankerteil 3 erfolgt in äquivalenter Weise. Nun kann das Festschrauben des Ankerteils 3 mittels der Ankerschraube 35 erfolgen. Die entsprechende Höhenausrichtung der Fassadenplatte geschieht durch Verdrehen des Zuggliedes mittels eines am Mehrkant 26 angreifenden Maulschlüssels. Das in beide Hauptrichtungen verchwenkbare Auge 16 erlaubt dabei eine optimale Anpassung zwischen bauwerkseitiger Befestigungsstelle und fassadenplattenseitig befindlichem Angriffspunkt.

Insbesondere geht aus Fig. 4 hervor, daß die Breite y des Fensterabschnitts 21' dem Durchmesser des Querstücks 24 entspricht. Gegebenenfalls ist es auch möglich, die Breite geringer zu halten als den Durchmesser des Querstücks. Dann müßte beim Einwinkeln des Querstücks eine zusätzliche Bewegung ausgeführt werden derart, daß das Querstück mit seiner einen Längskante voran in den Fensterabschnitt eintaucht.

**Patentansprüche**

1. Fassadenplattenanker (1) mit einem bauwerkseitig und einem fassadenplattenseitig zu befestigenden Ankerteil (3, 6) und einem zur Höheneinstellbarkeit längenveränderbaren, die beiden Ankerteile verbindenden Zugglied (4) und einer Augen-/Querstückverbindung zwischen den Teilen, dadurch gekennzeichnet, daß das Querstück (24) und der an dieses anschließende Zuggliedabschnitt (22) als eine in sich kippfeste Einwinkeleinheit des aus einem Flachbandstreifen gebogenen und mit seitlichem, sich bis zum Augenscheitel (17) fortsetzendem Einwinkelfenster (21) ausgestatteten Auges (16) gestaltet ist, welch letzteres in dem dem Augenscheitel (17) gegenüberliegenden Bereich eine quer zur Streifenebene liegende Aufhängebohrung (20) besitzt.

2. Fassadenplattenanker nach Anspruch 1, dadurch gekennzeichnet, daß der Flachbandstreifen auf seinem dem Einwinkelfenster (21) gegenüberliegenden Abschnitt (18) ein zusätzliches Fenster (23) besitzt, welches mit Abstand vom Augenscheitel (17) endet.

3. Fassadenplattenanker nach Anspruch 2, dadurch gekennzeichnet, daß das Einwinkelfenster (21) im Bereich seiner etwa deckend zum zusätzlichen Fenster (23) liegenden Länge breiter gestaltet ist als der von dort in den Bereich des Augenscheitels (17) reichende Fensterabschnitt (21'').

4. Fassadenplattenanker nach einem oder mehreren der vorhergehenden Ansprüche, dadurch gekennzeichnet, daß die Breite (x) des Fensterabschnitts (21'') im Bereich des Augenscheitels (17) etwa dem Durchmesser (d) des an das Querstück (24) anschließenden Zuggliedabschnitts (22) entspricht.

5. Fassadenplattenanker nach einem oder mehreren der vorhergehenden Ansprüche, dadurch gekennzeichnet, daß das Querstück (24) als Mutter des Zuggliedabschnitts (22) gestaltet ist.

6. Fassadenplattenanker nach einem oder mehreren der vorhergehenden Ansprüche, dadurch gekennzeichnet, daß das Querstück (24) im Querschnitt halbkreisförmig gestaltet ist mit dem Augenscheitel (17) zugekehrter Bogenfläche.

7. Fassadenplattenanker nach einem oder mehreren der vorhergehenden Ansprüche, dadurch gekennzeichnet, daß das fassadenplattenseitige Ankerteil (6) eine stopfenverschlossene Aufnahme (9) als Teil eines Abstandhalters (15) besitzt.

8. Fassadenplattenanker nach Anspruch 7, dadurch gekennzeichnet, daß das Ergänzungsteil (15') des Abstandhalters (15) in ein Gewinde (12) der hülsenförmigen Aufnahme (9) eingeschraubt ist, welches Gewindeloch mittels des einfügbaren Stopfens (13) verschließbar ist.

9. Fassadenplattenanker nach einem oder mehreren der vorhergehenden Ansprüche, gekennzeichnet durch zwei Augen (16, 31) mit je einem Querstück (24 bzw. 28), welche beide zueinander gegenläufige Mutterngewinde (27 bzw. 29) besitzen, durch welche die mit entsprechend gegenläufigem Gewinde ausgestatteten Zuggliedabschnitte (22 bzw. 25) durchschraubbar sind.

10. Fassadenplattenanker nach einem oder mehreren der vorhergehenden Ansprüche, gekennzeichnet durch einen Werkzeug-Angriffsabschnitt (26) im Mittelbereich des Zuggliedes (4).

11. Fassadenplattenanker nach Anspruch 10, dadurch gekennzeichnet, daß der Werkzeug-Angriffsabschnitt (26) als querschnittsgrößerer Mehrkant gestaltet ist.

12. Fassadenplattenanker nach einem oder mehreren der vorhergehenden Ansprüche, dadurch gekennzeichnet, daß der Zuggliedabschnitt (22, 25) ein Gewinde aufweist, das endständig verquetscht ist.

**Revendications**

1. Elément d'ancrage (1) pour plaques de façade comportant une pièce d'ancrage qui doit être fixée du côté du bâtiment et une pièce d'ancrage qui doit être fixée du côté d'une plaque de façade (3, 6), et un élément de traction (4) réglable en longueur en vue du réglage de la hauteur, et reliant les deux pièces d'ancrage, ainsi qu'une liaison entre les pièces par oeillet et pièce transversale, caractérisé en ce que la pièce transversale (24) et la partie (22) de l'élément de traction raccordée à celle-ci, se présente sous forme d'une unité d'équerrage non sujette au basculement de l'oeillet (16) formé par une boucle d'une bande plate et équipé d'une fenêtre latérale (21) d'équerrage qui se prolonge jusqu'au sommet (17) de l'oeillet, lequel oeillet comporte dans la zone qui se trouve à l'opposé de son sommet (17) un trou de suspension (20) situé transversalement par rapport au plan de la bande.

2. Elément d'ancrage de plaque de façade selon la revendication 1, caractérisé en ce que la bande plate comporte dans sa partie (18) située à l'opposé de la fenêtre d'équerrage (21) une fenêtre supplémentaire (23) qui se termine avec un certain décalage par rapport au sommet (17) de l'oeillet.

3. Elément d'ancrage de plaque de façade selon la revendication 2, caractérisé en ce que la fenêtre d'équerrage (21) a une plus grande largeur dans la zone de sa longueur recouvrant approximativement la fenêtre supplémentaire (23), que la partie (21'') allant de là vers la zone du sommet (17) de l'oeillet.

4. Elément d'ancrage de plaque de façade, selon la revendication une ou plusieurs des revendications précédentes, caractérisé en ce que la largeur (x) de la partie (21'') de fenêtre correspond, dans la zone du sommet (17) de l'oeillet, approximativement au diamètre (d) de la partie de l'élément de traction (22) qui est raccordée à la pièce transversale (24).

5. Elément d'ancrage de plaque de façade selon une ou plusieurs des revendications précédentes, caractérisé en ce que la pièce transversale (24) se présente sous forme d'un écrou de la partie (22) de l'élément de traction.

6. Elément d'ancrage de plaque de façade selon une ou plusieurs des revendications précédentes, caractérisé en ce que la pièce transversale (24) a en coupe transversale la forme d'un demi-cercle, dont la surface courbe est dirigée du côté du sommet (17) de l'oeillet.

7. Elément d'ancrage de plaque de façade selon une ou plusieurs des revendications précédentes, caractérisé en ce que la pièce d'ancrage (6) située du côté de la plaque de façade comporte un logement (9) fermé par bouchon, formant une partie d'un élément (15) de maintien de distance.

8. Elément d'ancrage de plaque de façade selon la revendication 7, caractérisé en ce que la pièce complémentaire (15') de l'élément (15) de maintien de distance est vissée dans un filetage (12) du logement (9) en forme de douille qui peut être fermé au moyen du bouchon (13) qui peut y être emboîté.

9. Elément d'ancrage de plaque de façade selon une ou plusieurs des revendications précédentes, caractérisé en ce qu'il possède deux oeillets (16, 31) munis chacun d'une pièce transversale (24, 28), chacune comportant des filetages femelles (27, 29) de sens inverse dans lesquels peuvent être vissées les parties (22, respectivement 25) des éléments de traction équipés de filetages en sens inverse.

10. Elément d'ancrage de plaque de façade selon une ou plusieurs des revendications précédentes, caractérisé en ce qu'il comporte dans la zone médiane de l'élément de traction, une partie (26) que l'on peut prendre avec un outil.

11. Elément d'ancrage de plaque de façade selon la revendication 10, caractérisé en ce que la partie (26) pour la prise à l'aide d'un outil a une forme présentant plusieurs pans de section transversale plus importante.

12. Elément d'ancrage de plaque de façade selon une ou plusieurs des revendications précédentes, caractérisé en ce que la partie (22, 25) de l'élément de traction présente un filetage qui est écrasé à son extrémité.

## Claims

1. Facing-panel tie (1) with a tie part (3) to be fastened to the building and a tie part (6) to be fastened to the facing panel, with a tension member (4) connecting the two tie parts and of variable length for height adjustability, and with an eye/crosspiece connection between the parts, characterized in that the crosspiece (24) and the tension-member portion (22) adjoining this are designed as an inherently tilt-proof single angle unit of the eye (16) which is bent out of a flat band strip and is equipped with a lateral single-angle aperture (21) continued as far as the eye vertex (17) and which, in the region located opposite the eye vertex (17), has a suspension bore (20) arranged transversely relative to the strip plane.

2. Facing-panel tie according to Claim 1, characterized in that the flat band strip possesses, on its portion (18) located opposite the single-angle aperture (21), an additional aperture (23) which terminates at a distance from the eye vertex (17).

3. Facing-panel tie according to Claim 2, characterized in that the single-angle aperture (21) is made wider in the region of its length approximately coinciding with the additional aperture (23) than the aperture portion (21'') extending from there into the region of the eye vertex (17).

4. Facing-panel tie according to one or more of the preceding claims, characterized in that the width (x) of the aperture portion (21'') in the region of the eye vertex (17) corresponds approximately to the diameter (d) of the tension-member portion (22) adjoining the crosspiece (24).

5. Facing-panel tie according to one or more of the preceding claims, characterized in that the crosspiece (24) is designed as a nut of the tension-member portion (22).

6. Facing-panel tie according to one or more of the preceding claims, characterized in that the crosspiece (24) is of semicircular cross-section with the curved surface confronting the eye vertex (17).

7. Facing-panel tie according to one or more of the preceding claims, characterized in that the tie part (6) located on the facing panel has a plug-closed receptacle (9) as part of a spacer (15).

8. Facing-panel tie according to Claim 7, characterized in that the complementary part (15') of the spacer (15) is screwed into a thread (12) of the sleeve shaped receptacle (9), the threaded hole being closable by means of the insertable plug (13).

9. Facing-panel tie according to one or more of the preceding claims, characterized by two eyes (16, 31), each with a crosspiece (24, 28), which both have mutually opposed nut threads (27, 29), through which the tension member portions (22, 25) equipped with correspondingly opposed threads can be screwed.

10. Facing-panel tie according to one or more of the preceding claims, characterized by a tool engagement portion (26) in the middle region of the tension member (4).

11. Facing-panel tie according to Claim 10, characterized in that the tool engagement portion (26) is designed as a polygon of larger cross-section.

12. Facing-panel tie according to one or more of the preceding claims, characterized in that the tension member portion (22, 25) has a thread which is squashed at the ends.

FIG.1

FIG.2

FIG.3

FIG.4

FIG.5

FIG.6

EP 0 246 421 B1

# FIG.7